# DEMANDE DE BREVET EUROPEEN

(11) **EP 0 949 550 A1**
(43) Date de publication de la demande: **13.10.1999**
(21) Numéro de dépôt: 98106536.0
(22) Date de dépôt: 09.04.1998
(51) Int. Cl.: G05B 19/404, B23Q 11/14, B23Q 11/10

(54) **Machine-outil à commande numérique et procédé de refroidissement d'une telle machine**

(71) Demandeur: Marksa SA, 2400 Le Locle (CH)
(72) Inventeur: L'Her, Joel, 1400 Yverdon (CH)
(74) Mandataire: Ravenel, Thierry Gérard Louis

(57) **Abrégé**

L'invention concerne une machine-outil à commande numérique comprenant un groupe réfrigérant (8) muni d'un compresseur (10) et d'une électrovanne (EVS), ce groupe réfrigérant (8) étant destiné à réguler la température d'un fluide de travail chargé de refroidir la broche porte-outil (2) de ladite machine-outil (1), caractérisée en ce qu'une unité de régulation (38), intégrée dans l'unité de commande numérique (4) de la machine-outil (1), commande le fonctionnement du groupe réfrigérant (8).

## Description

La présente invention concerne de manière générale les machines électriques, et est plus particulièrement relative au refroidissement de la broche d'une machine-outil à commande numérique. L'invention concerne également un procédé de refroidissement de telles machines.

Dans la plupart des machines-outils, il est nécessaire de refroidir l'outil de perçage, d'alésage, de fraisage ou autre, afin d'éviter qu'il n'atteigne une température trop élevée susceptible de le détériorer.

Ce refroidissement peut être assuré très simplement par arrosage de l'outil et de la pièce à usiner au moyen d'un tuyau fixé, par exemple, sur le bâti de la machine. Ce tuyau délivre un fluide de coupe, classiquement une émulsion eau dans huile ou une huile seule, par l'intermédiaire d'une buse située à distance fixe de la partie active de l'outil qu'elle arrose. Le fluide de coupe sert à refroidir et à lubrifier l'outil de travail et la pièce à usiner, et évacue par rinçage les copeaux coupés. Après utilisation, le fluide de coupe est recueilli dans un réservoir situé sous la zone de travail de la machine-outil, d'où il est ensuite aspiré par une pompe pour être à nouveau utilisé. Le réservoir comprend un échangeur de chaleur qui maintient la température du fluide de coupe à une température de consigne généralement proche de la température ambiante.

Le système ci-dessus permet de préserver les caractéristiques physico-chimiques du fluide de coupe. La régulation en température de l'outil de travail et de la broche qui le porte demeure toutefois médiocre, ce qui nuit à la précision d'usinage. On comprend, en effet, que la broche qui sert à commander l'avance de l'outil de travail ou à maintenir la pièce à usiner peut se dilater sous l'effet d'un échauffement, et donc entraîner des imprécisions dans la fabrication de la pièce. Or, les machines-outils actuelles proposent couramment des précisions d'usinage de l'ordre du micron qui exigent, pour pouvoir être conservées, que la température de la broche porte-outil ne varie pas de plus de quelques dixièmes de degré Celsius par rapport à une valeur de consigne. C'est pourquoi il a été proposé de faire circuler un fluide de refroidissement directement dans la broche porte-outil de la machine. Un tel système comprend habituellement une pompe qui aspire le fluide de refroidissement d'un réservoir et le dirige vers la broche. Au retour, le fluide de refroidissement s'écoule à travers un groupe réfrigérant au contact de l'échangeur duquel il se refroidit. Un capteur de température thermostatique commande la mise en marche du groupe réfrigérant lorsque la température du liquide de refroidissement dépasse une valeur de consigne.

Ce système n'est pas pleinement satisfaisant pour les précisions d'usinage recherchées. Les conduites à travers lesquelles le fluide de refroidissement s'écoule sont en effet longues de plusieurs mètres, de sorte que l'échauffement de la broche ne peut être détecté que tardivement, au moment du retour du fluide de refroidissement vers le groupe réfrigérant. En outre, lorsque le fluide est refroidi, il faut encore attendre qu'il parvienne à nouveau jusqu'à la broche. Cette régulation présente ainsi une forte inertie qui se traduit par une fluctuation permanente de la température de la broche autour de sa valeur de consigne, sans qu'il soit possible de la stabiliser. L'échauffement de la broche est par ailleurs étroitement lié aux conditions particulières d'usinage mises en oeuvre (vitesse et profondeur de coupe en fonction de la nature du matériau dans lequel est réalisée la pièce à usiner). Or, les paramètres de fonctionnement du groupe réfrigérant sont totalement indépendants de ceux de la machine-outil. Il est donc impossible d'optimiser la régulation de la température par adaptation de la puissance frigorifique du groupe réfrigérant aux conditions d'usinage. Il faut en outre remarquer que les machines-outils actuelles comportent fréquemment plusieurs groupes réfrigérants chargés de refroidir la broche, le liquide d'arrosage, l'armoire d'alimentation électrique de la machine et voire même, pour les machines les plus perfectionnées, l'ambiance dans la cabine de travail. Il va de soi qu'une telle multiplication des moyens réfrigérants renchérit considérablement le prix de revient de ces machines.

La présente invention a pour but de remédier aux problèmes et inconvénients ci-dessus en proposant une machine-outil à commande numérique dont le système de refroidissement permet de réguler de manière très précise la température de la broche porte-outil.

A cet effet, l'invention concerne une machine-outil à commande numérique comprenant un groupe réfrigérant muni d'un compresseur et d'une électrovanne, ce groupe réfrigérant étant destiné à réguler la température d'un fluide de travail chargé de refroidir la broche porte-outil de ladite machine-outil, caractérisée en ce qu'une unité de régulation, intégrée dans l'unité de commande numérique de la machine-outil, commande le fonctionnement du groupe réfrigérant.

L'invention concerne également un procédé de refroidissement de la broche porte-outil d'une machine-outil à commande numérique comprenant un groupe réfrigérant, caractérisé en ce que les paramètres de réglage de la machine-outil programmés dans l'unité de commande numérique de celle-ci sont utilisés pour prévoir l'échauffement de la broche en cours d'usinage et ajuster en conséquence la puissance frigorifique du groupe réfrigérant ou l'ouverture d'une vanne réglable disposée au plus près de la broche porte-outil.

Grâce à ces caractéristiques, la présente invention procure un groupe réfrigérant dont les paramètres de fonctionnement sont continument ajustés en fonction de la température de la broche ou de la température de retour du liquide de refroidissement de cette broche d'une part, et des conditions de marche de la machine-outil d'autre part. En fonction des paramètres de fonctionnement (vitesse et profondeur de coupe) programmés par l'opérateur, l'unité de régulation, mettant à profit la puissance de calcul de l'unité de commande numérique de la machine-outil, pourra anticiper l'échauffement de la broche porte-outil et ajuster en conséquence la puissance frigorifique de l'unité réfrigérante. On obtient ainsi une régulation très précise quel que soit le type de pièce à usiner. Ce résultat peut être atteint sans qu'il soit nécessaire de modifier la construction du groupe réfrigérant, ce qui permet de réaliser des économies substantielles. Selon un autre avantage, les différentes alarmes du groupe réfrigérant sont reprises sur l'unité de commande numérique de la machine-outil. L'opérateur peut ainsi contrôler en permanence les conditions de marche du groupe réfrigérant et est immédiatement alerté en cas de défaillance.

Selon une variante d'exécution de l'invention, la marche du groupe réfrigérant est commandée par l'unité de régulation via un variateur électronique qui permet de réguler la température de la broche porte-outil de manière encore plus précise par intégration ou dérivation.

Selon un autre aspect de la présente invention, une vanne réglable, commandée par l'unité de régulation, est intégrée dans la machine-outil, au plus près de la broche porte-outil à refroidir, le groupe réfrigérant assurant uniquement le maintien du liquide de refroidissement de ladite broche à une température stable préétablie.

D'autres caractéristiques et avantages de la présente invention apparaîtront plus clairement à la lecture de la description détaillée qui suit d'un exemple de réalisation du système de refroidissement selon l'invention, cet exemple étant donné à titre purement illustratif et non limitatif, en liaison avec les dessins annexés dans lesquels :
- la figure 1 est une vue schématique de principe d'une machine-outil à commande numérique dans laquelle est intégrée une unité de régulation du système de refroidissement selon l'invention, et
- la figure 2 est une vue schématique de principe d'une machine-outil comprenant une vanne réglable disposée au plus près de la broche porte-outil.

La présente invention va être décrite en référence à une machine-outil à commande numérique pour percer, fraiser, aléser ou autre. Il va néanmoins de soi que la présente invention s'applique de manière identique à d'autres types de machines électriques comprenant une unité de commande numérique telle que notamment les machines de découpage par faisceau laser et les machines à électroérosion.

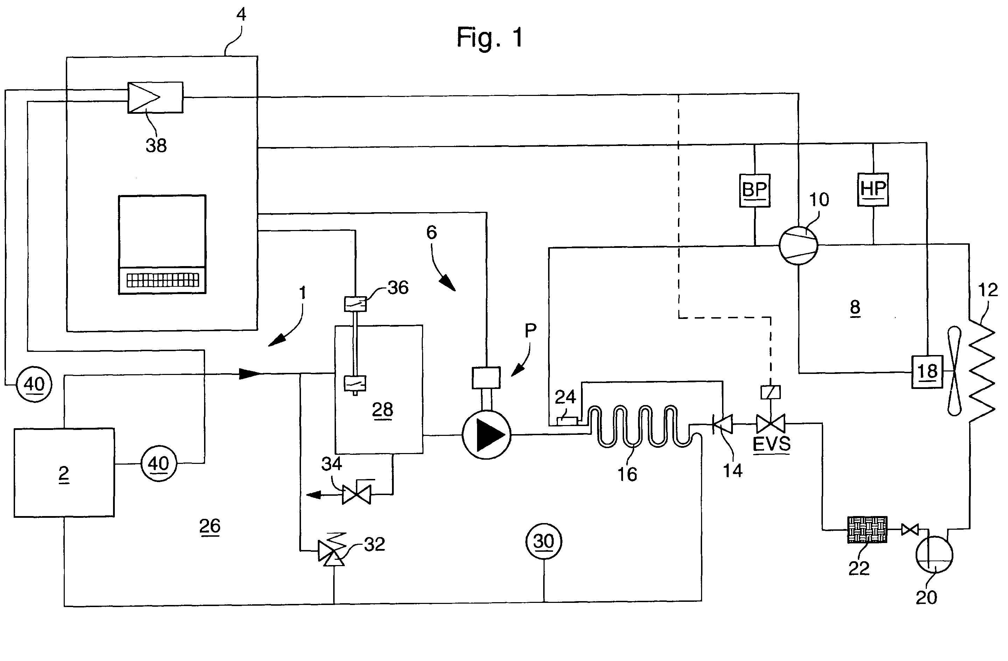

Comme représenté sur la figure 1, la machine-outil, désignée dans son ensemble par la référence numérique générale 1, comporte une broche porte-outil 2 dont les paramètres de fonctionnement sont programmés par l'opérateur au moyen d'une unité de commande numérique 4.

La régulation en température de la broche 2 est assurée par un système de refroidissement 6 auquel la machine-outil 1 est associée. Ce système de refroidissement 6 comprend classiquement un circuit de refroidissement primaire ou groupe réfrigérant 8 dans lequel un premier fluide de refroidissement tel que, par exemple, un gaz du type R134 A, est mis en circulation sous l'effet de l'action d'un compresseur 10. Les principes qui sous-tendent le fonctionnement d'un tel groupe réfrigérant 8 sont bien connus de l'homme du métier et ne seront donc rappelés ici que dans la mesure où ils peuvent contribuer à une meilleure compréhension de l'invention.

A la sortie du compresseur 10, le fluide de refroidissement est à l'état gazeux. Sa température est de l'ordre de 60 à 70°C et sa pression est typiquement comprise entre 10 et 16 bars. Le fluide de refroidissement est ensuite dirigé vers un condenseur 12 dans lequel il se refroidit par échange thermique avec l'air ambiant. Cet échange thermique s'opérant à pression constante, le fluide de refroidissement passe progressivement à l'état liquide. Arrivé dans un détendeur 14, le fluide de refroidissement subit une détente brutale qui le fait à nouveau passer à l'état gazeux sous l'effet de la chute de pression engendrée par la détente. Il s'écoule ensuite dans un évaporateur 16 sous une pression de 1 à 3 bars et à une température habituellement comprise entre - 5 et 20°C. Le fluide de refroidissement est finalement dirigé vers le compresseur 10 et un nouveau cycle de compression/détente peut reprendre.

Le groupe réfrigérant 8 décrit ci-dessus peut également comprendre de façon non limitative un ventilateur 18 chargé de forcer la circulation d'air au niveau du condenseur 12, un réservoir 20 de fluide de refroidissement, un déshydrateur 22 ainsi qu'un dispositif d'asservissement 24 monté en contre-réaction sur le détendeur 14 pour la régulation de celui-ci. Le groupe réfrigérant 8 comprend enfin une électrovanne EVS et des alarmes haute et basse pression respectivement HP et BP reliés à la commande numérique 4 de la machine-outil 1 et dont les rôles seront décrits en détail ultérieurement.

Le système de refroidissement 6 ci-dessus comprend également un circuit de refroidissement secondaire 26 dans lequel un fluide de travail chargé de refroidir ou de lubrifier les paliers de la broche porte-outil 2 est mis en circulation sous l'effet de l'action d'une pompe P. Outre cette pompe P, le circuit de refroidissement secondaire 26 peut comprendre de façon non limitative un réservoir 28 de fluide de travail, un manomètre 30 et une vanne de dérivation 32. Le réservoir 28 est quant à lui muni d'une vanne de vidange 34 et d'un contact de niveau 36 relié à la commande numérique 4 de la machine-outil 1 selon un mode de réalisation préféré de l'invention qui sera décrit en détail ultérieurement.

Le principe de fonctionnement du circuit de refroidissement secondaire 26 est le suivant. Le fluide de travail s'écoule dans la broche porte-outil 2 dont il refroidit ou lubrifie les paliers, puis est aspiré par la pompe P qui le dirige vers l'évaporateur 16 du circuit de refroidissement primaire 8 au contact duquel il se refroidit. Un nouveau cycle de refroidissement de la broche 2 peut ensuite reprendre.

Comme déjà précisé en introduction, le principe inventif qui sous-tend la présente invention consiste à commander la marche du groupe réfrigérant 8 non plus de façon indépendante, mais à partir de l'unité de commande numérique 4 de la machine-outil 1.

A cet effet, et conformément à la première forme d'exécution de l'invention représentée sur la figure 1, on intègre dans l'unité de commande numérique 4 de la machine-outil 1 une unité de régulation 38 chargée de commander la marche générale du groupe réfrigérant 8. Cette unité de régulation 38 consiste en un circuit électronique logique dont la construction et la programmation sont de la compétence ordinaire de l'homme du métier et ne seront donc pas détaillés davantage ici. En amont, l'unité de régulation 38 est reliée à au moins un capteur de température 40. Dans l'exemple représenté sur le dessin, ces capteurs de température 40 sont au nombre de deux. L'un de ces capteurs 40 peut servir à mesurer la température ambiante dans le bâti de la machine-outil 1, tandis que l'autre capteur 40 mesure la température de la broche porte-outil 2. Ces capteurs 40 peuvent être par exemple du type thermistance. En aval, l'unité de régulation 38 est reliée au compresseur 10 du groupe réfrigérant 8.

Le fonctionnement de l'unité de régulation 38 selon l'invention est le suivant. Les capteurs 40 communiquent en permanence des signaux représentatifs des valeurs des températures qu'ils mesurent à l'unité de régulation 38. Dès que l'une des températures mesurées excède une valeur de consigne préétablie, l'unité de régulation 38 commande la mise en marche du compresseur 10 de façon à corriger l'écart de température détecté et à l'annuler. Aussitôt que la température mesurée correspond à nouveau à la valeur de consigne, l'unité de régulation 38 provoque l'arrêt du compresseur 10.

Selon une autre caractéristique importante de l'invention, l'unité de régulation 38 prend en compte, outre les valeurs des températures mesurées par les capteurs 40, les paramètres d'usinage (vitesse de la broche, profondeur de coupe etc.) programmés par l'opérateur dans l'unité de commande numérique 4 de la machine-outil 1. Pour chaque type de pièce à usiner, il devient ainsi possible de prévoir à l'avance l'échauffement de la broche porte-outil 2 et donc d'adapter la puissance frigorifique du groupe réfrigérant 8 en conséquence. A cet effet, la machine-outil 1 comprend des moyens électroniques permettant d'engendrer un signal électrique représentatif des paramètres d'usinage programmés dans l'unité de commande numérique 4 de ladite machine 1, ce signal étant ensuite adressé à l'unité de régulation 38 pour réguler la puissance frigorifique du groupe réfrigérant 8. Enfin, l'unité de régulation 38 commande la mise en route et l'arrêt général du groupe réfrigérant 8 en début et en fin de travail.

Selon une variante d'exécution représentée en trait interrompu sur la figure 1, l'unité de régulation 38 peut être reliée à l'électrovanne EVS du groupe réfrigérant 8. Les principes de fonctionnement restent inchangés. L'unité de régulation 38 commande l'ouverture et la fermeture de l'électrovanne EVS en fonction des informations (température, paramètres d'usinage) recueillies. La fermeture de l'électrovanne EVS provoque une chute de pression dans le groupe réfrigérant 8. Cette baisse de pression est détectée par l'alarme basse pression BP qui commande alors l'arrêt du compresseur 10.

Dans l'exemple ci-dessus, le compresseur 10 est commandé par l'unité de régulation 38 en mode tout ou rien. Selon une variante, l'unité de régulation 38 peut être reliée au compresseur 10 du groupe réfrigérant 8 par l'intermédiaire d'un variateur électronique (non représenté). Cette solution, certes plus coûteuse, permet néanmoins une régulation beaucoup plus précise selon un mode intégration ou dérivation.

Selon une autre caractéristique importante de l'invention, toutes les alarmes du système de refroidissement 6 sont reprises sur l'unité de commande numérique 4 de la machine-outil 1. On peut citer, à titre d'exemple, les alarmes basse pression BP et haute pression HP qui commandent l'arrêt du compresseur 10 en cas de valeur anormalement faible (respectivement élevée) de la pression du fluide de refroidissement dans le groupe réfrigérant 8. D'autres alarmes peuvent bien entendu être prévues. L'opérateur de la machine-outil 1 est ainsi renseigné en permanence sur les conditions de marche du groupe réfrigérant 8 et est immédiatement alerté en cas de défaillance. De la même manière, le contact de niveau 36 et la pompe P du circuit de refroidissement secondaire 26 sont également reliés à l'unité de commande numérique 4. La pompe P est ainsi protégée contre tout manque de fluide de travail dans le circuit de refroidissement secondaire 26. Sa mise en route et son arrêt sont également commandés depuis la machine-outil 1, lors de la mise en route du groupe réfrigérant 8.

Dans tout ce qui suit, les éléments identiques à ceux décrits précédemment seront désignés par les mêmes références numériques.

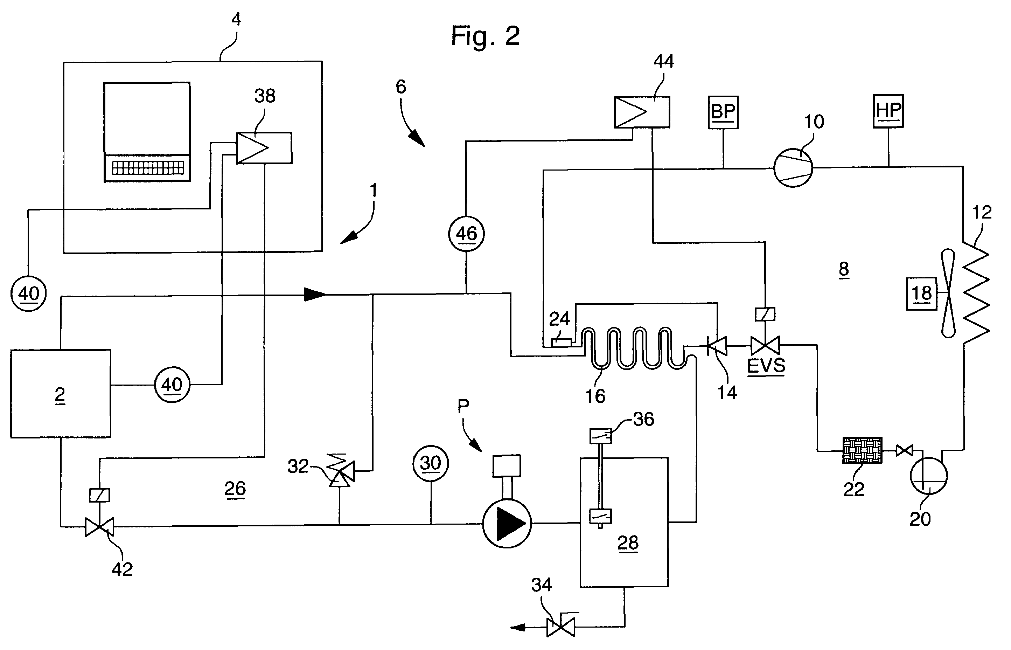

Conformément à une seconde variante d'exécution de la présente invention représentée sur la figure 2, une vanne 42 réglable de 0 à 100% est montée dans le circuit de refroidissement secondaire 26, au plus près de la broche porte-outil 2. Grâce à cette variante, on évite tout problème d'inertie dans la régulation de la température de la broche 2. L'ouverture de la vanne 42 est commandée selon un mode intégration ou dérivation (régulation PID) par une unité de régulation 38 analogue à celle décrite en référence à la figure 1, ce qui permet une régulation très précise de la température de la broche 2. Comme précédemment, cette unité de régulation 38 tient compte de la valeur des températures fournies par les capteurs 40 d'une part, et des paramètres de réglage de la marche de la broche 2 d'autre part. Les alarmes du système de refroidissement 6 peuvent également être reprises sur l'unité de commande numérique 4 de la machine-outil 1. Les liaisons entre les alarmes et l'unité de commande numérique 4 n'ont pas été représentées sur le dessin pour des raisons de clarté uniquement.

Le groupe réfrigérant 8 peut ainsi constituer une unité autonome qui a uniquement pour but de maintenir avec une précision raisonnable le fluide de travail circulant dans le circuit de refroidissement secondaire 26 à une température de consigne préétablie. A cet effet, le groupe réfrigérant 8 comporte sa propre unité de régulation 44 reliée à un capteur de température 46 placé sur le trajet de retour du fluide de travail vers l'évaporateur 16. Cette unité de régulation 44 commandera la marche du groupe réfrigérant 8 via l'électrovanne EVS ou le compresseur 10. Ce groupe réfrigérant 8 peut être avantageusement remplacé par un simple système échangeur de chaleur utilisant un fluide tel que, par exemple, de l'eau dont la température est stable et connue.

Il va de soi que diverses variantes et modifications simples entrent dans le cadre de la présente invention. Il peut notamment être prévu de relier simultanément l'unité de régulation 38 décrite en référence à la figure 1 au groupe réfrigérant 8 d'une part, et à la vanne 42 décrite en référence à la figure 2 d'autre part, grâce à quoi une régulation extrêmement précise de la température de la broche porte-outil 2 peut être atteinte.

## Revendications

1. Machine-outil à commande numérique comprenant un groupe réfrigérant (8) muni d'un compresseur (10) et d'une électrovanne (EVS), ce groupe réfrigérant (8) étant destiné à réguler la température d'un fluide de travail chargé de refroidir la broche porte-outil (2) de ladite machine-outil (1), caractérisée en ce qu'une unité de régulation (38), intégrée dans l'unité de commande numérique (4) de la machine-outil (1), commande le fonctionnement du groupe réfrigérant (8).

2. Machine-outil selon la revendication 1, caractérisée en ce qu'elle comprend des moyens électroniques permettant d'engendrer un signal représentatif des paramètres d'usinage programmés dans l'unité de commande numérique (4) de ladite machine (1), ce signal étant ensuite adressé à l'unité de régulation (38) pour réguler la puissance frigorifique du groupe réfrigérant (8).

3. Machine-outil selon l'une quelconque des revendications 1 ou 2, caractérisée en ce qu'elle comprend au moins un capteur de température (40) engendrant un signal représentatif de l'échauffement de la broche porte-outil (2), ce signal étant ensuite adressé à l'unité de régulation (38) qui commande la mise en marche du groupe réfrigérant (8) dès que la température mesurée excède une valeur de consigne préétablie.

4. Machine-outil selon l'une quelconque des revendications 1 à 3, caractérisée en ce que l'unité de régulation (38) est reliée au compresseur (10) du groupe réfrigérant (8).

5. Machine-outil selon l'une quelconque des revendications 1 à 3, caractérisée en ce que l'unité de régulation (38) est reliée à l'électrovanne (EVS) du groupe réfrigérant (8).

6. Machine-outil selon l'une quelconque des revendications précédentes, caractérisée en ce que l'unité de régulation (38) commande le compresseur (10) ou l'électrovanne (EVS) du groupe réfrigérant (8) en mode tout ou rien.

7. Machine-outil selon l'une quelconque des revendications 1 à 4, caractérisée en ce que l'unité de régulation (38) commande le compresseur (10) du groupe réfrigérant (8) via un variateur électronique.

8. Machine-outil à commande numérique comprenant un circuit de refroidissement (26) dans lequel circule un fluide de travail chargé de refroidir la broche porte-outil (2) de ladite machine (1), caractérisée en ce qu'elle comprend une unité de régulation (38) intégrée dans son unité de commande numérique (4) et qui commande le fonctionnement d'une vanne (42) réglable montée dans ledit circuit de refroidissement (26), au plus près de la broche porte-outil (2), et en ce qu'elle comprend un système échangeur de chaleur destiné à maintenir le fluide de travail à une température de consigne préétablie.

9. Machine-outil selon la revendication 8, caractérisée en ce que le système échangeur de chaleur est un groupe réfrigérant (8) comportant sa propre unité de régulation (44) reliée à un capteur de température (46).

10. Machine-outil selon l'une quelconque des revendications 3 ou 9, caractérisée en ce que les capteurs de température (40, 46) sont des thermistances.

11. Machine-outil selon l'une quelconque des revendications précédentes, caractérisée en ce que toutes les alarmes du groupe réfrigérant (8) et du circuit de refroidissement (26) sont reprises sur l'unité de commande numérique (4) de la machine-outil (1).

12. Procédé de refroidissement de la broche porte-outil (2) d'une machine-outil (1) à commande numérique comprenant un groupe réfrigérant (8), caractérisé en ce que les paramètres de réglage de la marche de la machine-outil (1) programmés dans l'unité de commande numérique (4) de celle-ci sont utilisés pour prévoir à l'avance l'échauffement de la broche (2) en cours d'usinage et ajuster en conséquence la puissance frigorifique du groupe réfrigérant (8) ou l'ouverture d'une vanne (42) réglable disposée au plus près de la broche porte-outil (2).

13. Procédé selon la revendication 12, caractérisé en ce que l'on tient compte, pour réguler la puissance du groupe réfrigérant (8) ou ajuster l'ouverture de la vanne (42) réglable, de l'échauffement de la broche porte-outil (2) mesuré par un capteur de température (40).
